(19)

Europäisches
Patentamt
European
Patent Office
Office européen
des brevets

(11) **EP 4 644 492 A1**

(12) **EUROPEAN PATENT APPLICATION**
published in accordance with Art. 153(4) EPC

(43) Date of publication:
**05.11.2025 Bulletin 2025/45**

(21) Application number: **23912487.8**

(22) Date of filing: **16.10.2023**

(51) International Patent Classification (IPC):
*C09C 1/56* (2006.01)    *C09C 1/50* (2006.01)
*H01M 4/62* (2006.01)    *H01M 4/90* (2006.01)

(52) Cooperative Patent Classification (CPC):
**C09C 1/50; C09C 1/56; H01M 4/62; H01M 4/90;**
**Y02E 60/50**

(86) International application number:
**PCT/KR2023/015954**

(87) International publication number:
**WO 2024/143806 (04.07.2024 Gazette 2024/27)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **27.12.2022 KR 20220185669**

(71) Applicant: **OCI Company Ltd.**
**Seoul 04532 (KR)**

(72) Inventors:
• **PARK, Jaeheung**
  **Seongnam-si Gyeonggi-do 13212 (KR)**
• **KIM, Junyoung**
  **Seongnam-si Gyeonggi-do 13212 (KR)**
• **LEE, Jaeseok**
  **Seongnam-si Gyeonggi-do 13212 (KR)**

(74) Representative: **Zacco Sweden AB**
**P.O. Box 5581**
**Löjtnantsgatan 21**
**114 85 Stockholm (SE)**

(54) **POST-TREATMENT METHOD FOR CARBON BLACK AND CARBON BLACK POST-TREATED THEREBY**

(57)    The present invention relates to a post-treatment method for carbon black and carbon black post-treated thereby and, more specifically, to a post-treatment method for wet-pelleted furnace carbon black, carbon black post-treated thereby, and use thereof.

FIG. 1

(a) Step of preparing wet-pelleted furnace carbon black

↓

(b) Step of subjecting the furnace carbon black to a high-temperature heat treatment at a temperature of 1200 °C or higher in a furnace

↓

(c) Step of continuously transferring the high-temperature heat-treated furnace carbon black to a pulverizer

↓

(d) Step of obtaining carbon black having an average particle diameter of 20 μm or less by pulverizing the furnace carbon black transferred to the pulverizer

**Description**

**TECHNICAL FIELD**

The present disclosure relates to a post-treatment method for carbon black and carbon black post-treated thereby, and more particularly, to a method of post-treating wet-pelleted furnace carbon black among carbon blacks and carbon black post-treated thereby.

**BACKGROUND**

Carbon black refers to an aggregate of very fine spherical particles obtained by incomplete combustion of hydrocarbons or compounds containing carbon. Carbon black forms primary particles in a reactor, and these primary particles fuse together to form grape-shaped aggregates. Further, carbon black can be broadly classified into acetylene carbon black and furnace carbon black, and of these, furnace carbon black has the advantage of being inexpensive but has the disadvantage of being difficult to achieve high crystallinity compared to acetylene carbon black.

Carbon black affects the quality of the material used depending on its physical properties, the physical properties include crystallinity, specific surface area, structure, particle size, and the like, and the properties of carbon black can be adjusted through various post-treatments. Carbon black is used in various fields such as industrial paints, coating compositions, and various printed materials, can be used as a conductive material for lithium-ion secondary batteries as it can have electrical properties, and can be used as a fuel cell catalyst support if high crystallinity is ensured.

Further, it is known to use carbon black powder or carbon black pellets (or beads) in order to produce carbon black as an industrial product, and in this case, carbon black pellets can be classified into a wet-pelleted form and a dry-pelleted form.

Carbon black powder has excellent dispersibility in various solvents but has a disadvantage in that its productivity is low during processes such as heat treatment due to its low bulk density. On the other hand, carbon black pellets have the advantage of a high bulk density but have the limitation of being disadvantageous when produced as a slurry because their average particle diameter is larger and their dispersibility is lower compared to carbon black powder.

Carbon black, which has been used lately as a material for advanced and diversified secondary batteries, is continuously in need of improving its physical properties according to its uses and of developing technology that can efficiently implement it in terms of process.

**SUMMARY**

TECHINCL OBJECTS

It is an object of the present disclosure to provide a method of post-treating carbon black having excellent physical properties efficiently in terms of process by using wet-pelleted furnace carbon black, and carbon black post-treated thereby.

It is another object of the present disclosure to provide a high-quality carbon black that is produced using wet-pelleted furnace carbon black and has reduced surface resistance and impurity content, and a conductive material for secondary batteries including the same.

It is yet another object of the present disclosure to provide a high-quality carbon black that is produced using wet-pelleted furnace carbon black and has high crystallinity and reduced impurity content, and a catalyst support for fuel cells including the same.

The objects of the present disclosure are not limited to those mentioned above, and other objects and advantages of the present disclosure that have not been mentioned can be understood by the following description and will be more clearly understood by the embodiments of the present disclosure. Furthermore, it will be readily appreciated that the objects and advantages of the present disclosure can be realized by the means set forth in the claims and combinations thereof.

TECHNICAL SOLUTION

In order to achieve the above objects, one aspect of the present disclosure may provide a method of post-treating carbon black including: (a) a step of preparing wet-pelleted furnace carbon black; (b) a step of subjecting the furnace carbon black to a high-temperature heat treatment at a temperature of 1200 °C or higher in a furnace; (c) a step of continuously transferring the high-temperature heat-treated furnace carbon black to a pulverizer; and (d) a step of obtaining carbon black having an average particle diameter of 20 $\mu$m or less by pulverizing the furnace carbon black transferred to the pulverizer.

The average particle diameter of the carbon black produced may be 15 $\mu$m or less.

An atmosphere gas may be introduced in the high-temperature heat treatment of said step (b).

The atmosphere gas may include one or more of nitrogen ($N_2$) gas and argon (Ar) gas.

The carbon black produced may have a total content of metal impurities of 100 ppm or less.

The heat treatment temperature may be 2000 to 2500 °C, and the carbon black produced may have a high-crystallinity carbon black having an Lc of 4.0 nm or more.

The heat treatment temperature may be 1000 to 1500 °C, and the carbon black produced may be a conductive carbon black.

The transfer in said step (c) may be performed by a flowing medium, and the transfer of the furnace carbon black by the flowing medium and separation of the flowing medium from the transferred furnace carbon black may be performed simultaneously.

The pulverizer in said step (d) may be performed in any one of a high-speed mixer, a ball mill, and an air jet mill.

In addition, according to another aspect of the present disclosure, carbon black post-treated by the method of post-treating carbon black in accordance with one aspect of the present disclosure may be provided.

Furthermore, according to another aspect of the present disclosure, a conductive material for lithium-ion secondary batteries including carbon black post-treated by the method of post-treating carbon black in accordance with one aspect of the present disclosure may be provided.

Moreover, according to another aspect of the present disclosure, a catalyst support for fuel cells including carbon black post-treated by the method of post-treating carbon black in accordance with one aspect of the present disclosure may be provided.

EFFECTS OF THE DISCLOSURE

According to the present disclosure, carbon black having excellent physical properties can be post-treated efficiently in terms of process and cost by using wet-pelleted furnace carbon black.

Since the wet-pelleted furnace carbon black used in the method of producing carbon black of the present disclosure has a high bulk density, the amount of loading in the process of producing carbon black can be increased significantly, and since a series of steps that can continuously produce carbon black are included, productivity can be improved significantly.

The carbon black post-treated according to the method of post-treating carbon black of the present disclosure can lower the content of metal impurities and sulfur, and at the same time, has an advantage of being suitable for obtaining carbon black that can be used for various purposes of products requiring high quality by lowering the surface resistance or significantly increasing the crystallinity.

In addition to the foregoing effects, specific effects of the present disclosure will be stated together while describing specific details for implementing the present disclosure below.

**BRIEF DESCRIPTION OF THE DRAWINGS**

FIG. 1 schematically shows a flowchart of a method of producing carbon black in accordance with one aspect of the present disclosure;

FIG. 2 shows an SEM image of the carbon black of Reference Example 1 of the present disclosure;

FIG. 3 shows an SEM image of the carbon black of Embodiment A of the present disclosure;

FIG. 4 shows an SEM image of the carbon black of Comparative Example A of the present disclosure;

FIG. 5 shows an SEM image of the carbon black of Comparative Example B of the present disclosure;

FIG. 6 shows an actual photograph of an electrode coated with the carbon black slurry of Embodiment A of the present disclosure;

FIG. 7 shows an actual photograph of an electrode coated with the carbon black slurry of Comparative Example A of the present disclosure;

FIGS. 8(a) and 8(b) show an SEM image and a mapping image by SEM-EDS analysis of the cross-section of an electrode produced with the carbon black slurry of Embodiment A of the present disclosure;

FIGS. 9(a) and 9(b) show an SEM image and a mapping image by SEM-EDS analysis of the cross-section of an electrode produced with the carbon black slurry of Comparative Example A of the present disclosure;

FIGS. 10(a) and 10(b) show an SEM image and a mapping image by SEM-EDS analysis of the surface of an electrode produced with the carbon black slurry of Embodiment A of the present disclosure;

FIGS. 11(a) and 11(b) show an SEM image and a mapping image by SEM-EDS analysis of the surface of an electrode produced with the carbon black slurry of Comparative Example A of the present disclosure;

FIG. 12 shows an SEM image of an electrode coated with the carbon black slurry of Embodiment X of the present disclosure;

FIG. 13 shows an SEM image of an electrode coated with the carbon black slurry of Comparative Example X of the present disclosure; and

FIG. 14 shows an example of a method for analyzing the average particle diameter of carbon black particles through SEM imaging.

## BEST MODE FOR CARRYING OUT THE INVENTION

The foregoing objects, features, and advantages will be described in detail below with reference to the accompanying drawings, and accordingly, those having ordinary skill in the art to which the present disclosure pertains will be able to readily carry out the technical ideas of the present disclosure.

In describing the present disclosure, if it is determined that specific descriptions of known technologies related to the present disclosure may unnecessarily obscure the gist of the present disclosure, the detailed descriptions will be omitted. Hereinafter, preferred embodiments in accordance with the present disclosure will be described in detail with reference to the accompanying drawings. The same reference numerals in the drawings are used to refer to the same or similar components.

When expressions, such as "includes," "has," "consists of," "arranges," and "is provided with" a component, are used herein, other parts may be added unless "only" is used. When a component is expressed in its singular form, it also encompasses instances where the plural form applies, unless specifically stated otherwise.

In construing components herein, it is construed to include margins of error even if there is no separate explicit description.

In the following, the present disclosure will be described in greater detail.

A method of post-treating carbon black of the present disclosure is characterized by using wet-pelleted furnace carbon black. As described above, wet-pelleted furnace carbon black is not used when producing carbon black for battery materials despite its cost and process advantages due to the limitation of being difficult to produce it as a slurry because of its low dispersibility, and carbon black powder has been used when producing actual industrial carbon black.

As a result of intensive study, the present inventors have found that wet-pelleted furnace carbon black can take the advantage of being able to improve productivity because of a high bulk density and a high amount of loading in the process, and at the same time, the low dispersibility, which is the limitation of wet-pelleted carbon black, can be resolved by post-treating the carbon black by adjusting the heat treatment and pulverization conditions. Specifically, the optimal carbon black particle diameter that can significantly improve the dispersibility during slurry production was experimentally found in the present disclosure. Furthermore, the present invention has been completed by finding out that the purity of the post-treated carbon black can be increased, environmental friendliness can be achieved by reducing the sulfur content, and a variety of physical properties such as having conductivity by increasing crystallinity or lowering surface resistance can be ensured depending on the uses of the post-treated carbon black.

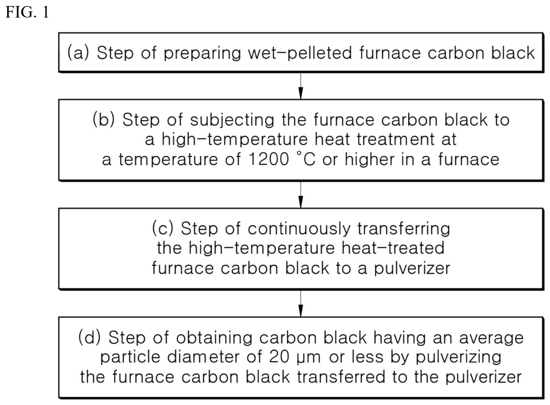

Specifically, as shown in FIG. 1, the method of post-treating carbon black in accordance with one implementation of the present disclosure may include:

(a) a step of preparing wet-pelleted furnace carbon black;

(b) a step of subjecting the furnace carbon black to a high-temperature heat treatment at a temperature of 1200 °C or higher in a furnace;

(c) a step of continuously transferring the high-temperature heat-treated furnace carbon black to a pulverizer; and

(d) a step of obtaining a final post-treated carbon black by pulverizing the furnace carbon black transferred to the pulverizer.

In particular, the average particle diameter of the carbon black finally obtained according to the method of post-treating carbon black of the present disclosure is, for example, preferably 20 μm or less, and more preferably 15 μm or less, from the viewpoint of improving dispersibility. The smaller the particle diameter of the post-treated carbon black, the more advantageous it is, and thus, the lower limit of the average particle diameter is not particularly specified. Carbon black having an average particle diameter in the above range has excellent dispersibility in a solvent and can thus improve the processability when producing a slurry.

The wet-pelleted furnace carbon black in step (a) above used in the present disclosure is wet-pelleted in a pelletizing machine, and is not particularly limited as long as it is a furnace carbon black used in the technical field. For example, the average particle diameter of the wet-pelleted furnace carbon black may be about 0.25 to 2.0 mm, and the average value of the bulk density may be about 0.2 to 0.3 g/cm$^3$, but are not necessarily limited thereto.

Step (b) above is a heat treatment step, which is a step for modifying the physical properties of the carbon black, and can increase the purity by removing impurities such as metals by heat treatment at a high temperature of 1200 °C or higher.

In the high-temperature heat treatment of step (b) above, an atmosphere gas may be introduced so as to remove impurities more effectively. The atmosphere gas may include one or more of nitrogen ($N_2$) gas and argon (Ar) gas, and preferably, nitrogen gas may be used.

According to one implementation of the present disclosure, there is an advantage of being able to increase the purity of the post-treated carbon black, and the content of metal impurities and/or sulfur can be reduced.

According to one implementation of the present disclosure, the total content of metal impurities in the post-treated carbon black may be, for example, 100 ppm or less, for example, 90 ppm or less, for example, 80 ppm or less, for example, 70 ppm or less, for example, 60 ppm or less, for example, 50 ppm or less, for example, 40 ppm or less, for example, 30 ppm or less, for example, 20 ppm or less, and for example, 10 ppm or less.

The metal impurities are metal elements that may be contained in carbon black, may specifically include Al, Ba, Ca, Cd, Co, Cr, Cu, Fe, K, Li, Mg, Mn, Mo, Na, Ni, Pb, Sb, Sn, Sr, Ti, V, and Zn, and may be measured by inductively coupled plasma optical emission spectrometry (ICP-OES).

In addition, the content of sulfur contained in the post-treated carbon black is not particularly limited and may be significantly lowered compared to that before the furnace carbon black is post-treated, and the specific sulfur content may be adjusted according to the intended use of the post-treated carbon black.

According to one implementation of the present disclosure, the sulfur content of the post-treated carbon black may be, for example, 3000 ppm or less, for example, 2000 ppm or less, for example, 1000 ppm or less, and for example, 500 ppm or less.

Further, by adjusting the heat treatment temperature in the heat treatment step (b) above, the surface properties of the carbon black can be adjusted according to the use of the carbon black.

According to one implementation of the present disclosure, in order to ensure electrical conductivity by reducing the surface resistance compared to that before the post-treatment, the heat treatment temperature in step (b) above is preferably 1200 to 1800 °C, and more preferably 1200 to 1500 °C.

On the other hand, in order to increase the crystallinity of carbon black, the heat treatment temperature in step (b) above is preferably 2000 to 2500 °C, and more preferably 2300 to 2500 °C. As an indicator for confirming the high crystallinity of carbon black, a large microcrystallite size Lc value is, in particular, preferable.

Specifically, the carbon black post-treated in the present disclosure may have, for example, an Lc of 4.0 nm or more, for example, an Lc of 5.0 nm or more, and for example, an Lc of 6.0 nm or more, and since it can be evaluated as having a very high crystallinity at or above 4.0 nm, there is an advantage of being able to obtain a high-crystallinity carbon black according to the method of post-treating carbon black of the present disclosure.

The furnace carbon black heat-treated in step (c) above is transferred to a pulverizer for pulverization, the transfer in the present disclosure may be performed by a flowing medium, and the flowing medium is not particularly limited but may include air for convenience of the process. In addition, by simultaneously performing the transfer of the furnace carbon black by the flowing medium and the separation of the flowing medium from the transferred furnace carbon black, the productivity of the process can be increased by continuously post-treating carbon black. Furthermore, in the method of post-treating carbon black of the present disclosure, since the amount of loading per post-treatment process can be increased significantly by using wet-pelleted carbon black and the targeted physical properties of the carbon black can be ensured even if a large amount of loading is post-treated at once, these process advantages can be achieved at the same time, and thus the convenience and productivity of the process can be increased.

As a device for continuously performing the transfer and separation of the heat-treated furnace carbon black in this manner, it is preferable to use a pulse jet bag filter device, for example. The device has the advantage of being able to continuously transfer the furnace carbon black with air as a medium by vacuum, and proceed with the process efficiently and continuously by automatically separating the air after the transfer.

In step (d) above, the heat-treated furnace carbon black is pulverized, and the average particle diameter of the pulverized carbon black is preferably 20 $\mu$m or less, and more preferably 15 $\mu$m or less, as described above. The method or device for pulverizing is not particularly limited, but a high-speed mixer, a ball mill, an air jet mill, etc., may be used as a pulverizer, for example, and an air jet mill may be preferably used in terms of ease of pulverization.

The carbon black of the present disclosure that has been post-treated as described above can be used suitably in products that require a high-quality carbon black, such as conductive materials for lithium-ion secondary batteries or catalyst supports for fuel cells.

## MODES FOR CARRYING OUT THE INVENTION

Hereinafter, the present disclosure will be described in greater detail by way of embodiments and experimental examples. However, the embodiments and experimental examples below are merely illustrative of the present disclosure, and the content of the present disclosure is not limited to the embodiments and experimental examples below.

### <Embodiments>

### PART 1 - Heat Treatment Process Test: Embodiments 1 to 8 and Comparative Examples 1 to 3

Wet-pelleted furnace carbon black (DC3501 of OCI Company Ltd.) or powdered furnace carbon black (DC3501 of OCI Company Ltd.) was prepared, and was heat-treated in a heat-resistant type furnace in a batch mode. As a specific heat treatment method, the prepared carbon black was loaded into the graphite crucible at about 70 vol% each time, and was heat-treated for 1 hour at the maximum temperature set forth in Table 1 below at a temperature increase rate of 5 °C/min, and nitrogen gas or argon gas was injected as an atmosphere gas at this time.

[Table 1]

| | Prepared furnace carbon black | | | Heat treatment conditions | |
|---|---|---|---|---|---|
| | Carbon black type | Bulk density (g/cm$^3$) | Loading amount (g) | Maximum temperature (°C) | Atmosphere gas |
| Comparative Example 1 | Powder | 0.05 | 500 | 1000 | N$_2$ |
| Comparative Example 2 | Powder | 0.05 | 500 | 1500 | N$_2$ |
| Comparative Example 3 | Powder | 0.05 | 500 | 2000 | N$_2$ |
| Comparative Example 4 | Wet Pellet | 0.25 | 2500 | 1000 | N$_2$ |
| Embodiment 1 | Wet Pellet | 0.25 | 2500 | 1200 | N$_2$ |
| Embodiment 2 | Wet Pellet | 0.25 | 2500 | 1500 | N$_2$ |
| Embodiment 3 | Wet Pellet | 0.25 | 2500 | 1800 | N$_2$ |
| Embodiment 4 | Wet Pellet | 0.25 | 2500 | 2000 | N$_2$ |
| Embodiment 5 | Wet Pellet | 0.25 | 2500 | 2300 | N$_2$ |
| Embodiment 6 | Wet Pellet | 0.25 | 2500 | 1000 | Ar |
| Embodiment 7 | Wet Pellet | 0.25 | 2500 | 1500 | Ar |
| Embodiment 8 | Wet Pellet | 0.25 | 2500 | 2000 | Ar |

The physical properties of each of the carbon blacks heat-treated in Embodiments 1 to 8 and Comparative Examples 1 to 3 were measured according to (1) to (5) below, and are shown in Table 2 below.

(1) Specific surface area

: The specific surface area was analyzed by nitrogen adsorption using the Brunauer-Emmett-Teller (BET) equation (analytical instrument: Micromeritics ASAP 2460).

(2) Crystallinity, Lc (200)

: X-ray diffraction (XRD) analysis (analytical instrument: Panalytical Empyrean Alpha 1) was performed and calculation was made using the Scherrer equation of [Mathematical Formula 1] below.

$$\text{[Mathematical Formula 1] Scherrer equation: } Lc = 0.89\lambda / (Bc \cos \varphi c)$$

$\lambda$ = wavelength of anode, 1.540998 (constant)

Bc = FWHM(full width at half maximum) (measured value)

$\varphi_c$ = XRD 002 peak position (measured value)

(3) Measurement of metal impurity content

: Inductively coupled plasma optical emission spectrometry (analytical instrument: inductively coupled plasma optical emission spectrometer)

(4) Measurement of sulfur content

: Elemental analysis (analytical instrument: LECO CS-200 analyzer)

(5) Surface resistance

: The post-treated carbon black was dispersed in an isopropyl alcohol (IPA) solvent at a concentration of about 10 wt% and then produced as a slurry, the produced slurry was coated on an aluminum (Al) electrode plate in a thickness of about 50 $\mu$m with a doctor blade and then dried at about 100 °C for 1 hour, thereby producing an electrode, and the surface of the produced electrode was measured for surface resistance with a resistance meter (analytical instrument: Mitsubishi MCP-T610).

[Table 2]

| | Specific surface area (m$^2$/g) | Lc (nm) | Metal (ppm) | Sulfur (ppm) | Surface resistance ($\Omega$) |
|---|---|---|---|---|---|
| Comparative Example 1 | 82.3 | 1.7 | 243 | 3780 | 20.4 |
| Comparative Example 2 | 81.7 | 2.8 | 197 | 1830 | 16.7 |
| Comparative Example 3 | 78.8 | 4.8 | 53 | 270 | 21.9 |
| Comparative Example 4 | 81.9 | 1.9 | 253 | 3890 | 20.7 |
| Embodiment 1 | 81.2 | 2.2 | 217 | 2870 | 14.5 |
| Embodiment 2 | 80.5 | 2.7 | 187 | 1920 | 16.5 |
| Embodiment 3 | 79.3 | 3.6 | 123 | 1140 | 18.9 |
| Embodiment 4 | 77.9 | 4.8 | 51 | 320 | 22.1 |
| Embodiment 5 | 76.8 | 5.2 | 32 | 130 | 26.3 |
| Embodiment 6 | 82.2 | 1.9 | 262 | 3840 | 21.1 |
| Embodiment 7 | 80.9 | 2.8 | 198 | 1850 | 16.2 |
| Embodiment 8 | 78.5 | 4.8 | 72 | 310 | 22.4 |

As can be seen from Tables 1 and 2 above, the Lc value indicating crystallinity increased significantly and the content of metal impurities and sulfur decreased as the heat treatment temperature increased. It was found that the effect of reducing the content of metal impurities was also significant when nitrogen gas was used as the atmosphere gas during the heat treatment process. This is because argon gas is a monoatomic molecule of Ar, whereas nitrogen is a diatomic molecule as N$_2$, and thus, it is presumed that nitrogen gas is separated into nitrogen ions at high temperatures and combines with metal impurities, causing the metal elements to be gasified and discharged. In addition, when compared with the case of conventionally using powdered carbon black, there was no change in physical properties according to the heat treatment temperature even when wet-pelleted carbon black was used. This is interpreted to mean that even if wet-pelleted carbon black, which has not been used as a material for batteries, is heat-treated, physical properties at the equivalent level of those obtained by heat-treating powdered carbon black can be obtained by adjusting the heat treatment conditions.

Further, it can be seen that the surface resistance value after coating with the slurried heat-treated carbon black decreased when the heat treatment temperature was in the range of about 1200 to 1500 °C, but the experimental results showed that the surface resistance value rather increased again when the heat treatment temperature exceeded 1500 °C.

Since carbon black for use as a conductive material for lithium-ion secondary batteries, for which conductivity (electrical conductivity) is the most important physical property, requires the surface resistance value to be low, it was experimentally confirmed that a heat treatment temperature of 1200 to 1500 °C was suitable for obtaining a conductive carbon black.

Moreover, carbon black for use as a catalyst support for fuel cells further requires the physical property of durability of carbon black to be high rather than its electrical conductivity. Therefore, according to the above experimental results, it was experimentally confirmed that the carbon black having a high level of crystallinity, i.e., Lc of 4 nm or more, required a heat treatment temperature of 2000 °C or higher.

PART 2: **Test of Slurry for Lithium-Ion Secondary Batteries**

Experiments were conducted to check the production state of a slurry for lithium-ion secondary batteries and the relationship between the average particle diameter after pulverizing and post-treating the carbon black and the production state of the slurry.

- Reference Example 1: Comparative Example 2 above was adopted as Reference Example 1 for performance comparison with the powdered carbon black.

- Embodiment A: The carbon black heat-treated in Embodiment 2 above was pulverized to have an average particle diameter of 10.8 $\mu$m using an air jet mill, which was labeled as Embodiment A.

- Comparative Example A: The one heat-treated in Embodiment 2 above used as it was (without pulverizing) was labeled as Comparative Example A.

- Comparative Example B: The carbon black heat-treated in Embodiment 2 above was pulverized using a high-speed stirring pulverizer, which is a type of high-speed mixer, to have an average particle diameter of 25.2 $\mu$m, which was labeled as Comparative Example B.

**<Measurement of Average Particle Diameter>**

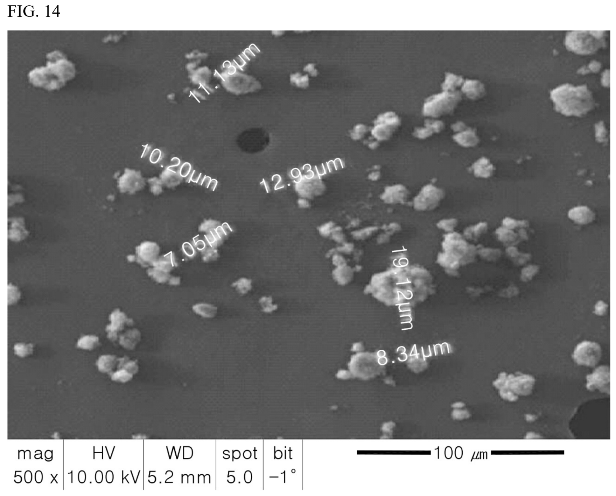

The average particle diameter is a value representing the average value obtained after analyzing about 100 carbon black particles in SEM images observed through a scanning electron microscope (SEM), and is shown in Table 3 below. An example of a method of measuring the average particle diameter is shown in FIG. 14.

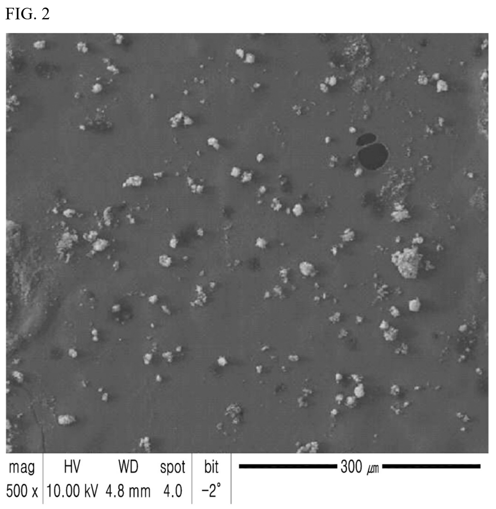

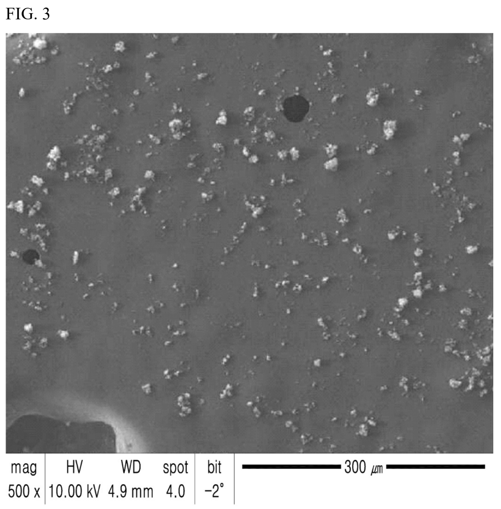

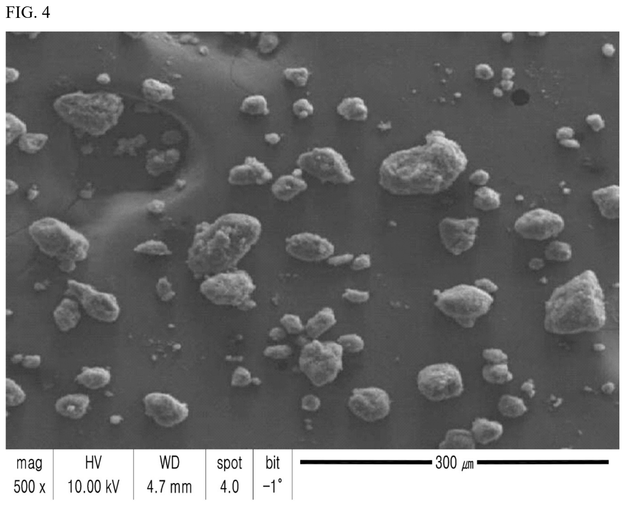

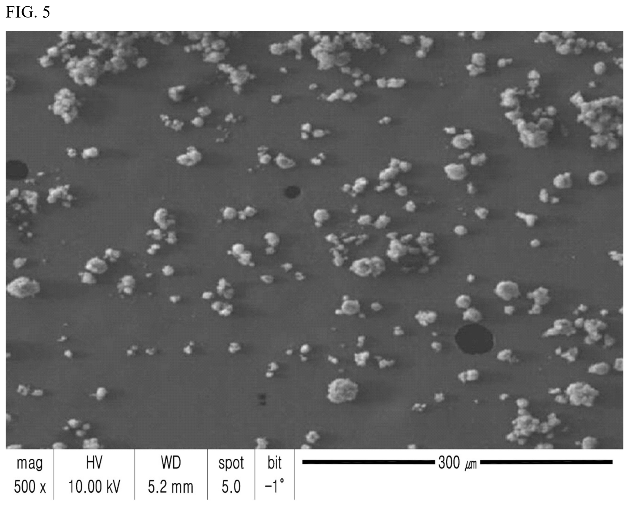

SEM images were taken using a scanning electron microscope for each of Reference Example 1, Embodiment A, and Comparative Examples A and B above and are shown in FIGS. 2 to 5.

**<Evaluation of Coatability and Electrodes of Slurry for Lithium-Ion Batteries>**

◎ **Slurry production:** Slurries were produced using the carbon blacks of Reference Example 1, Embodiment A, and Comparative Examples A and B above according to the following method, and the production states of the slurries were evaluated with the naked eye and are shown in Table 3 below.

NCM 523 (cathode active material), the carbon black (conductive material), and PVDF (binder) were mixed in the ratio of 95: 2.5: 2.5 (by weight), and a slurry solution of 50 wt% based on solid content was produced using NMP as the solvent and was dispersed using a Thinky mixer at room temperature for about 30 minutes.

◎ **Electrode production:** The slurry was coated on an Al (aluminum) electrode plate in a thickness of about 50 to 60 $\mu$m with a doctor blade, and then dried at 80 °C for about 3 hours. Then, the dried electrode was subjected to two-roll compression and dried again in a vacuum atmosphere at a temperature of about 100 °C for 12 hours, thereby producing an electrode (cathode).

[Table 3]

|  | Pulverization | Carbon black type | Heat treatment temperature (°C) | Average particle diameter (°C) | Slurry production state |
|---|---|---|---|---|---|
| Reference Example 1 | - | Powder | 1500 | 11.5 | Good |
| Embodiment A | Air jet mill | Wet pellet → Powder | 1500 | 10.8 | Good |
| Comparative Example A | High-speed stirring pulverizer | Wet pellet → Powder | 1500 | 25.2 | Poor |
| Comparative Example B | - | Wet pellet | 1500 | 52.3 | Poor |

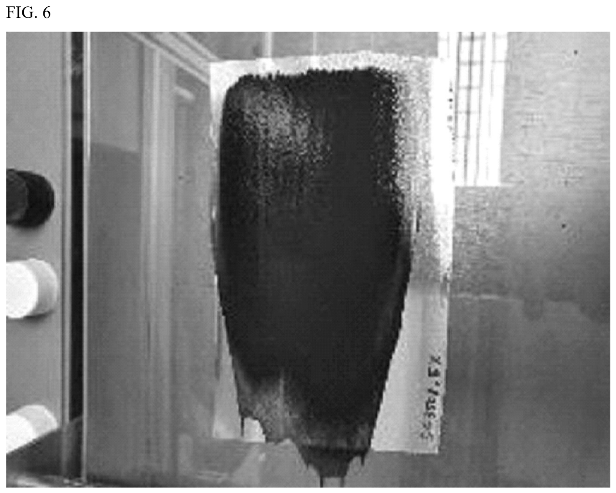

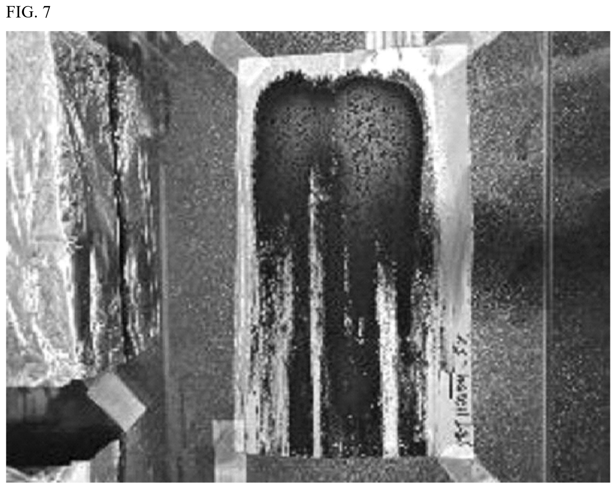

Actual photographs of the slurry coated on the electrode for each of Embodiment A and Comparative example A are shown in FIGS. 6 and 7, respectively.

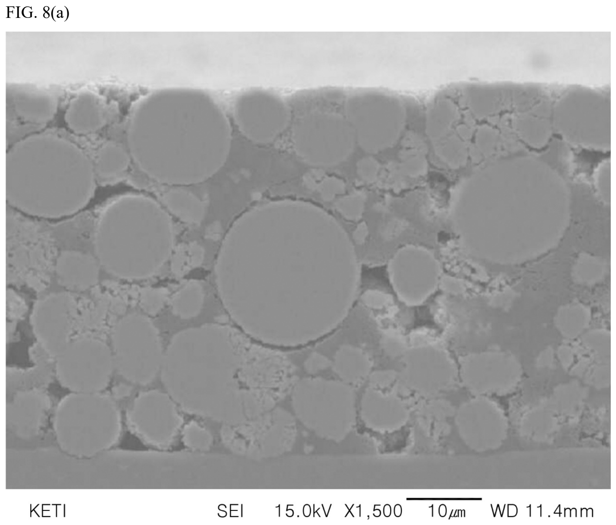

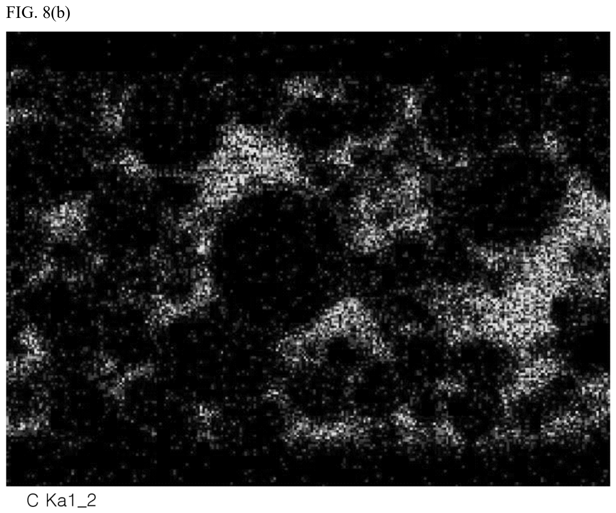

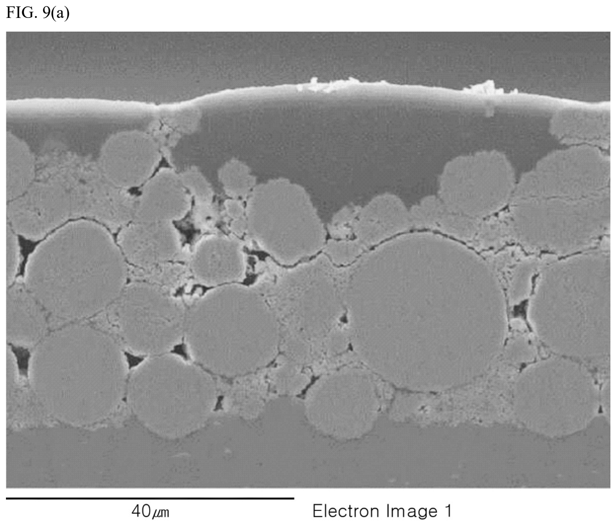

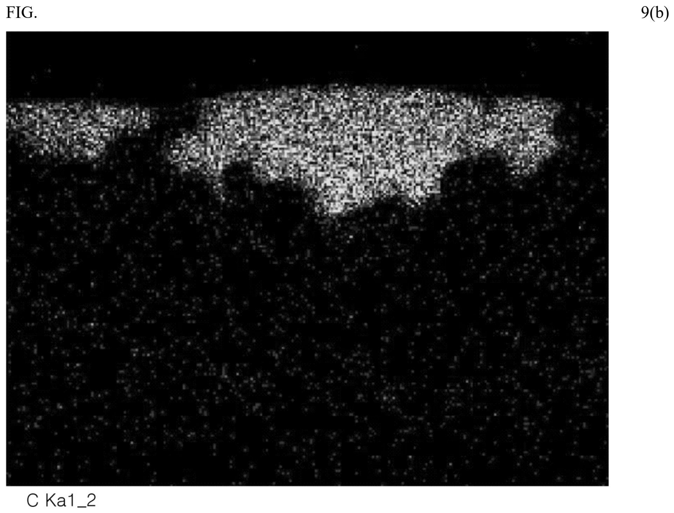

The cross-sections of the electrodes were observed with SEM images through a scanning electron microscope for each of Embodiment A and Comparative Example A, and are shown in FIGS. 8(a) and 9(a), respectively, and those obtained by mapping only the carbon component (the parts indicated in green or mint color) representing carbon black by SEM-EDS analysis using the SEM images are shown in FIGS. 8(b) and 9(b), respectively.

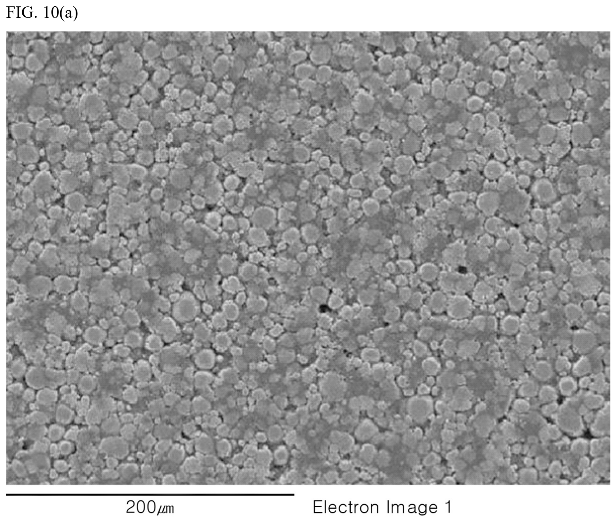

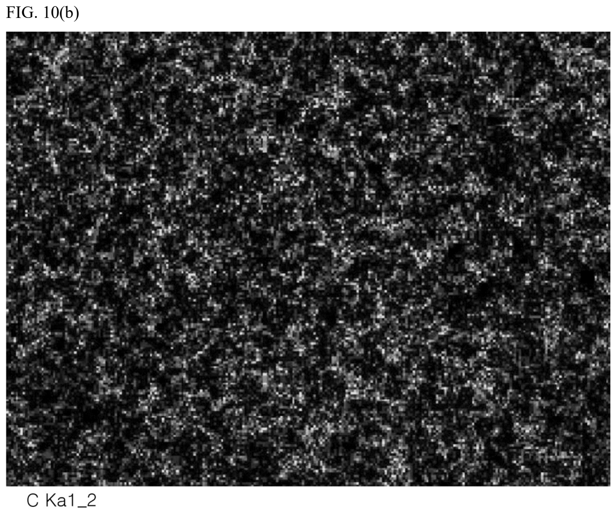

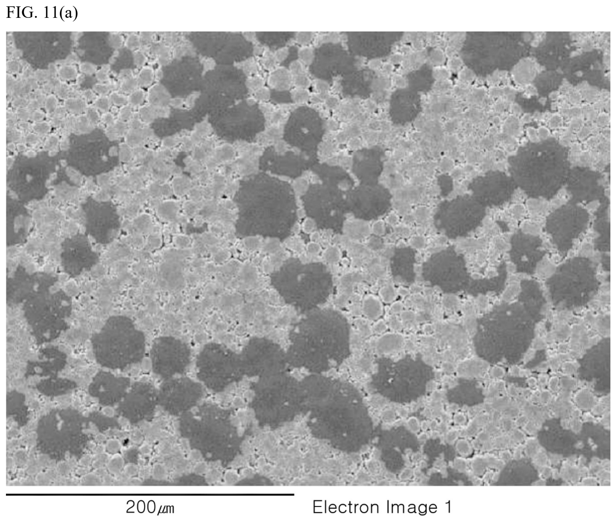

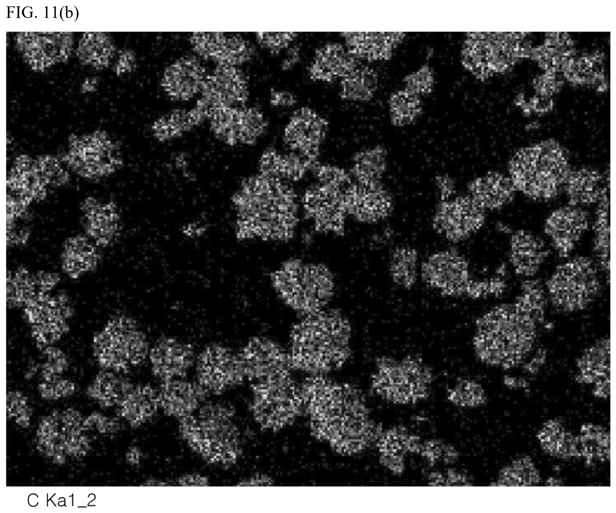

The surfaces of the electrodes were observed with SEM images through a scanning electron microscope for each of Embodiment A and Comparative Example A, and are shown in FIGS. 10(a) and 11(a), respectively, and those obtained by mapping only the carbon component (the parts indicated in green or mint color) representing carbon black by SEM-EDS analysis using the SEM images are shown in FIGS. 10(b) and 11(b), respectively.

In addition, as can be seen from the results in FIGS. 2 to 11, which are the SEM images and analysis taken in the evaluation of the electrode production, the slurry applicability (coatability) was good when sufficiently pulverized carbon black was used as in Embodiment A, and it was confirmed that the dispersibility of the carbon black on the cross-section and surface of the actually produced electrode too was increased.

For reference, the high-speed stirring pulverizer used in Comparative Example B is based on the principle that carbon black is pulverized into powder through physical collisions with SUS blades at high speed, there was a high possibility that the carbon black would be contaminated with metal impurities such as Fe and Ni due to the collisions with the blades at high speed, it was also difficult to operate for a long time due to heat generation during operation, and the particle size got smaller but was still larger than the level of carbon black in powder form (see Reference Example).

On the other hand, since the air jet mill is based on the principle that carbon black is pulverized through high-pressure air, there is a very low possibility of contamination with metal impurities. In addition, it was also confirmed to have the advantage of being able to operate for a long time as there was no heat generation. Furthermore, it was suitable for pulverization to the level of powdered carbon black.

## PART 3: Test of Slurry for Fuel Cells

Experiments were conducted to check the production state of a slurry for fuel cells and the relationship between the average particle diameter after pulverizing and post-treating the carbon black and the production state of the slurry.

-    Reference Example 2: Comparative Example 3 above was adopted as Reference Example 2 for performance comparison with the powdered carbon black.

-    Embodiment X: The carbon black heat-treated in Embodiment 4 above was pulverized to have an average particle diameter of 13.2 μm using an air jet mill, which was labeled as Embodiment A.

-    Comparative Example X: The one heat-treated in Embodiment 4 above used as it was (without pulverizing) was labeled as Comparative Example X.

-    Comparative Example Y: The carbon black heat-treated in Embodiment 4 above was pulverized using a high-speed stirring pulverizer, which is a type of high-speed mixer, to have an average particle diameter of 21.2 μm, which was labeled as Comparative Example Y.

**<Measurement of Average Particle Diameter>**

The average particle diameter is a value representing the average value obtained after analyzing about 100 carbon black particles in SEM images observed through a scanning electron microscope (SEM). This is shown in Table 4 below.

**<Evaluation of Coatability of Anode Slurry for Fuel Cells>**

◎ **Slurry production and coating:** Slurries were produced using the carbon blacks of Reference Example 2, Embodiment X, and Comparative Examples X and Y above as catalyst supports according to the following method, and the production states of the slurries were evaluated with the naked eye and are shown in Table 4 below.

Ionomer and the carbon black were mixed in the ratio of 50: 50 (by weight), and a slurry solution of 10 wt% based on solid content was produced using a mixed solvent obtained by mixing n-Butanol: DI-water = 50:50 (by weight) as a solvent and was dispersed using ultrasonic waves at room temperature for about 30 minutes.

◎ Slurry coating: The slurry was coated on a PTFE film in a thickness of about 10 to 15 $\mu$m with a doctor blade and then dried at 40 °C for about 15 minutes, thereby completing a slurry coating for a fuel cell anode electrode.

[Table 4]

| | Pulverization | Carbon black type | Heat treatment temperature (°C) | Average particle diameter (°C) | Slurry production state |
|---|---|---|---|---|---|
| Reference Example 2 | - | Powder | 2000 | 12.7 | Good |
| Embodiment X | Air jet mill | Wet pellet → Powder | 2000 | 13.2 | Good |
| Comparative Example X | High-speed stirring pulverizer | Wet pellet → Powder | 2000 | 21.2 | Poor |
| Comparative Example Y | - | Wet pellet | 2000 | 49.3 | Poor |

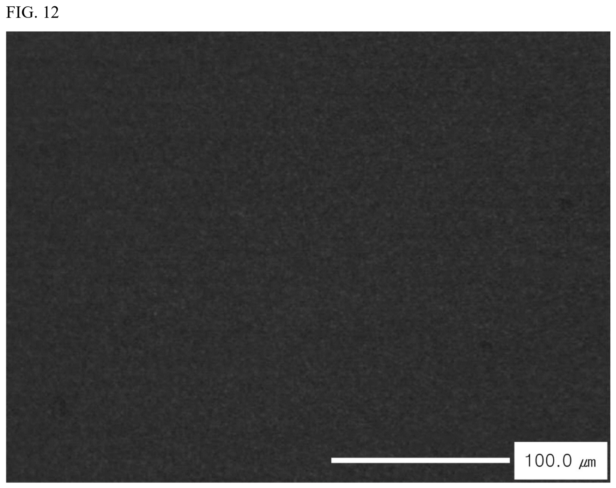

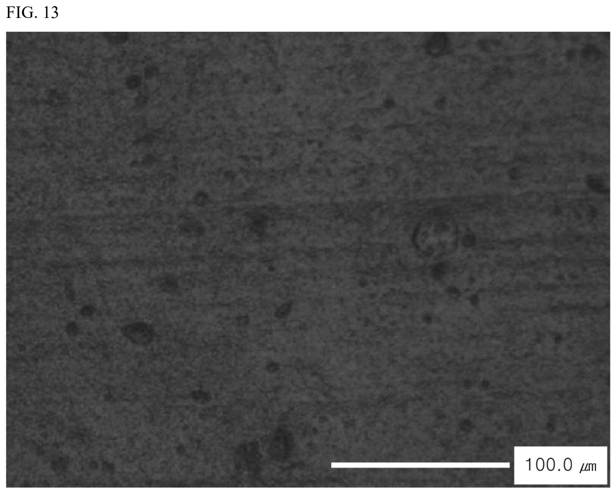

SEM images of the slurry coated on the electrode through the scanning electron microscope for each of Embodiment X and Comparative Example X are shown in FIGS. 12 and 13, respectively. However, as can be seen from FIGS. 12 and 13, since the slurry composition is mostly carbon black, the slurry coatability is not clearly distinguished in the SEM images, but irregularities and the like on the surface were observed with the naked eye, and it was confirmed that the slurry-coated surface of Embodiment X was much smoother, indicating better dispersion, than that of Comparative Example X.

Although the embodiments of the present specification have been described in greater detail, the present specification is not necessarily limited to these embodiments and can be modified and implemented in a variety of ways within a scope that does not depart from the technical idea of the present specification. Therefore, the embodiments disclosed herein are not intended to limit but to describe the technical idea of the present disclosure, and the scope of the technical idea of the present disclosure is not limited by these embodiments. Thus, it should be understood that the embodiments described above is illustrative and not restrictive in all aspects. The scope of protection of the present specification and the present disclosure should be construed by the claims, and all technical ideas within the scope equivalent thereto should be construed as falling within the scope of rights of the present specification and the present disclosure.

**Claims**

**1.** A method of post-treating carbon black, comprising:

(a) a step of preparing wet-pelleted furnace carbon black;
(b) a step of subjecting the furnace carbon black to a high-temperature heat treatment at a temperature of 1200 °C or higher in a furnace;
(c) a step of continuously transferring the high-temperature heat-treated furnace carbon black to a pulverizer; and

(d) a step of obtaining carbon black having an average particle diameter of 20 μm or less by pulverizing the furnace carbon black transferred to the pulverizer.

2. The method of claim 1, wherein the average particle diameter of the carbon black produced is 15 μm or less.

3. The method of claim 1, wherein an atmosphere gas is introduced in the high-temperature heat treatment of said step (b).

4. The method of claim 3, wherein the atmosphere gas comprises one or more of nitrogen ($N_2$) gas and argon (Ar) gas.

5. The method of claim 1, wherein the carbon black produced has a total content of metal impurities of 100 ppm or less.

6. The method of claim 1, wherein the heat treatment temperature is 2000 to 2500 °C, and
the carbon black produced is a high-crystallinity carbon black having an Lc of 4.0 nm or more.

7. The method of claim 1, wherein the heat treatment temperature is 1000 to 1500 °C, and
the carbon black produced is a conductive carbon black.

8. The method of claim 1, wherein the transfer in said step (c) is performed by a flowing medium, and
the transfer of the furnace carbon black by the flowing medium and separation of the flowing medium from the transferred furnace carbon black are performed simultaneously.

9. The method of claim 1, wherein the pulverizer in said step (d) is performed in any one of a high-speed mixer, a ball mill, and an air jet mill.

10. Carbon black post-treated according to the method of post-treating carbon black in accordance with any one of claims 1 to 9.

11. A conductive material for lithium-ion secondary batteries comprising carbon black post-treated according to any one of claims 1 to 9.

12. A catalyst support for fuel cells comprising carbon black post-treated according to any one of claims 1 to 9.

FIG. 1

(a) Step of preparing wet-pelleted furnace carbon black

↓

(b) Step of subjecting the furnace carbon black to
a high-temperature heat treatment at
a temperature of 1200 °C or higher in a furnace

↓

(c) Step of continuously transferring
the high-temperature heat-treated
furnace carbon black to a pulverizer

↓

(d) Step of obtaining carbon black having an average
particle diameter of 20 μm or less by pulverizing
the furnace carbon black transferred to the pulverizer

FIG. 2

| mag | HV | WD | spot | bit | | |
|---|---|---|---|---|---|---|
| 500 x | 10.00 kV | 4.8 mm | 4.0 | −2° | ■━━━━━ 300 μm ━━━━━■ | |

FIG. 3

| mag | HV | WD | spot | bit | |
|---|---|---|---|---|---|
| 500 x | 10.00 kV | 4.9 mm | 4.0 | −2° | 300 μm |

FIG. 4

| mag | HV | WD | spot | bit | 300 μm |
|---|---|---|---|---|---|
| 500 x | 10.00 kV | 4.7 mm | 4.0 | −1° | |

FIG. 5

| mag | HV | WD | spot | bit | 300 μm |
|-----|-----|-----|------|-----|--------|
| 500 x | 10.00 kV | 5.2 mm | 5.0 | −1° | |

FIG. 6

FIG. 7

FIG. 8(a)

KETI  SEI 15.0kV X1,500 10μm WD 11.4mm

FIG. 8(b)

C Ka1_2

FIG. 9(a)

40 μm                    Electron Image 1

FIG.
9(b)

C Ka1_2

FIG. 10(a)

200μm                    Electron Image 1

FIG. 10(b)

C Ka1_2

FIG. 11(a)

200μm      Electron Image 1

FIG. 11(b)

C Ka1_2

FIG. 12

100.0 µm

FIG. 13

100.0 µm

FIG. 14

## INTERNATIONAL SEARCH REPORT

| | |
|---|---|
| International application No. | |
| | **PCT/KR2023/015954** |

| | | |
|---|---|---|
| **A.** | **CLASSIFICATION OF SUBJECT MATTER** | |
| | **C09C 1/56**(2006.01)i; **C09C 1/50**(2006.01)i; **H01M 4/62**(2006.01)i; **H01M 4/90**(2006.01)i | |
| | According to International Patent Classification (IPC) or to both national classification and IPC | |

| | | |
|---|---|---|
| **B.** | **FIELDS SEARCHED** | |

Minimum documentation searched (classification system followed by classification symbols)

   C09C 1/56(2006.01); B82B 3/00(2006.01); C09C 1/50(2006.01)

Documentation searched other than minimum documentation to the extent that such documents are included in the fields searched

   Korean utility models and applications for utility models: IPC as above
   Japanese utility models and applications for utility models: IPC as above

Electronic data base consulted during the international search (name of data base and, where practicable, search terms used)

   eKOMPASS (KIPO internal) & keywords: 카본블랙(carbon black), 퍼니스(furnace), 열처리(heating), 도전성(conductive), 결정(crystal)

| | | |
|---|---|---|
| **C.** | **DOCUMENTS CONSIDERED TO BE RELEVANT** | |

| Category* | Citation of document, with indication, where appropriate, of the relevant passages | Relevant to claim No. |
|---|---|---|
| Y | JP 3008498 B2 (MITSUBISHI CHEM. IND.) 14 February 2000 (2000-02-14)<br>See claims 1-2; and paragraphs [0004]-[0008]. | 1-12 |
| Y | JP 2011-506656 A (EVONIK DEGUSSA GMBH) 03 March 2011 (2011-03-03)<br>See paragraphs [0021]-[0095]. | 1-12 |
| A | KR 10-0404809 B1 (M.M.M. S.A. et al.) 16 June 2005 (2005-06-16)<br>See entire document. | 1-12 |
| A | KR 10-2153241 B1 (KUMOH NATIONAL INSTITUTE OF TECHNOLOGY INDUSTRY-ACADEMIC COOPERATION FOUNDATION) 07 September 2020 (2020-09-07)<br>See entire document. | 1-12 |
| A | KR 10-2021-0113832 A (OCI COMPANY LTD.) 17 September 2021 (2021-09-17)<br>See entire document. | 1-12 |

| | | |
|---|---|---|
| ☐ Further documents are listed in the continuation of Box C. | ☑ See patent family annex. | |

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **26 January 2024** | **26 January 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/015954**

| Patent document cited in search report | | | Publication date (day/month/year) | Patent family member(s) | | | Publication date (day/month/year) |
|---|---|---|---|---|---|---|---|
| JP | 3008498 | B2 | 14 February 2000 | JP | 04-225074 | A | 14 August 1992 |
| JP | 2011-506656 | A | 03 March 2011 | JP | 5656641 | B2 | 21 January 2015 |
| | | | | KR | 10-1559189 | B1 | 13 October 2015 |
| | | | | KR | 10-2010-0103567 | A | 27 September 2010 |
| | | | | US | 2009-0155157 | A1 | 18 June 2009 |
| | | | | US | 8574527 | B2 | 05 November 2013 |
| | | | | WO | 2009-074435 | A2 | 18 June 2009 |
| | | | | WO | 2009-074435 | A3 | 29 October 2009 |
| KR | 10-0404809 | B1 | 16 June 2005 | WO | 97-03133 | A1 | 30 January 1997 |
| KR | 10-2153241 | B1 | 07 September 2020 | WO | 2021-125782 | A1 | 24 June 2021 |
| KR | 10-2021-0113832 | A | 17 September 2021 | None | | | |

Form PCT/ISA/210 (patent family annex) (July 2022)